# EUROPÄISCHE PATENTSCHRIFT

(11) **EP 0 724 693 B1**
(45) Veröffentlichungstag und Bekanntmachung des Hinweises auf die Patenterteilung: **25.03.1998**
(21) Anmeldenummer: 94929484.7
(22) Anmeldetag: 18.10.1994
(51) Int. Cl.: F16J 15/32

(54) **Dichtungsanordnung**
Sealing device
Dispositif d'étanchéité

(30) Priorität: 20.10.1993 DE 4335788
(43) Veröffentlichungstag der Anmeldung: 07.08.1996
(73) Patentinhaber: Busak + Shamban GmbH & Co., D-70565 Stuttgart (DE)
(72) Erfinder: JORDAN, Holger, D-70771 Leinfelden-Echterdingen (DE)
(74) Vertreter: KOHLER SCHMID + PARTNER
(86) Internationale Anmeldenummer: DE9401231
(87) Internationale Veröffentlichungsnummer: WO9511395

(56) Entgegenhaltungen:
- FR-A- 2 030 747
- FR-A- 2 365 738
- US-A- 3 642 293

## Beschreibung

Die Erfindung betrifft einen gummielastischen Dichtring zwischen zwei zueinander bewegten konzentrischen Maschinenteilen, die den Dichtring in einer zum zweiten Maschinenteil hin offenen, aus einem Nutgrund und Nutflanken bestehenden Nut des ersten Maschinenteils angeordnet halten, indem der Dichtring mit einer dynamischen Dichtkante an einer am zweiten Maschinenteil ausgebildeten Umfangsfläche anliegt, die mit einer von der dynamischen Dichtkante ausgehenden und sich zur Niederdruckseite N erstreckenden ersten Fläche einen ersten Keilspalt bildet, der Dichtring mit einer sich am Nutgrund abstützenden Außenumfangsfläche einen sich zur Niederdruckseite N öffnenden zweiten Keilspalt bildet, der Dichtring eine orthogonal zur Längsachse des zweiten Maschinenteils und die dynamische Dichtkante schneidende erste Ebene definiert, über die ein über einen Einschnitt getrennter erster und ein zweiter Dichtringabschnitt zur Hochdruckseite H gerichtet vorstehen, wobei der erste Dichtringabschnitt von mindestens einer Fläche begrenzt ist, die einenends in der dynamischen Dichtkante endet, und der zweite Dichtringabschnitt über den ersten Dichtringabschnitt in Richtung Hochdruckseite H vorsteht und von der Außenumfangsfläche und einer vierten und fünften sich schneidenden und einen Absatz bildenden Flächen gebildet ist, die eine vom Nutgrund beabstandete Schnittlinie bilden, die eine zur Längsachse parallel verlaufende zweite Ebene definiert.

Eine derartige Dichtung ist durch die DE 37 38 512 A1 bekanntgeworden.

Bei der bekannten Dichtung ist der Dichtring niederdruckseitig von einem konisch ausgebildeten Stützring umgeben. Der Stützring nimmt bei Druckbeaufschlagung die auf den Dichtring wirkenden Kräfte weitgehend auf, so daß die dynamische Dichtkante druckentlastet wird. Weiterhin ist zwischen dem Stützring und dem Dichtring ein erster Keilspalt angeordnet, in den der Dichtring bei Druckbeaufschlagung hineingezogen wird. Der erste Keilspalt wird daher bei Druckbeaufschlagung geschlossen. Ein zweiter Keilspalt ist bei dem bekannten Dichtring am Nutgrund vorgesehen, der bei einer weiteren Druckbeaufschlagung zu Null wird und dadurch die dynamische Dichtkante entlastet. Über die Neigung der Winkel in den Spalten und über die Rauhigkeit der Schräge des Stützrings läßt sich die Anpreßkraft der dynamischen Dichtkante an die jeweiligen Druck- und Werkstoffverhältnisse anpassen.

Die dynamische Dichtkante wird durch die Reaktion des bekannten Dichtrings auf eine Druckbelastung zwar druckentlastet, aber ein für das Rückförderverhalten eines Dichtrings notwendiger Keilspalt wird nicht ausgebildet. Ein zur Niederdruckseite ausgebildeter flach auslaufender Pressungsgradient fehlt gänzlich. Aus diesen Gründen kann die dynamische Dichtkante durch Extrusion zerstört und die Lebensdauer des Dichtrings herabgesetzt werden.

Der Erfindung liegt daher die Aufgabe zugrunde, die bekannte Dichtungsanordnung dahingehend weiterzubilden, daß sie auch im drucklosen Zustand den Spalt zwischen den Maschinenteilen sicher abdichtet und im druckbeaufschlagten Zustand verbesserte Standzeiten aufweist.

Diese Aufgabe wird erfindungsgemäß dadurch gelöst, daß eine Schnittlinie von einer dritten und einer vierten Ebene, in der die Außenumfangsfläche und die erste Fläche im deformationsfreien Zustand des Dichtrings liegen, in einem Raum zwischen der zweiten Ebene und der Umfangsfläche des zweiten Maschinenteils liegt, daß der Dichtring zwischen der ersten Ebene und der Niederdruckseite N als Vollkörper ausgebildet ist, und daß der Dichtring im in der Nut eingebauten, drucklosen Zustand einen sich zum Nutgrund öffnenden und von der niederdruckseitigen Nutflanke und einer angrenzenden Dichtringfläche gebildeten dritten Keilspalt aufweist.

Unter einem deformationsfreien Zustand des erfindungsgemäßen Dichtrings wird die mit einem Übermaß gegenüber dem Nutraum gefertigte, nicht verspannte und nicht druckbeaufschlagte Form des Dichtrings verstanden.

Unter einem Vollkörper wird ein Materialabschnitt verstanden, der ohne wesentliche Einschnitte gefertigt ist und das Verformungsverhalten eines Materialblocks aufweist.

Das Profil des erfindungsgemäßen Dichtrings ist derart ausgestaltet, daß der Dichtring im deformationsfreien Zustand einen zweiten Keilspalt im Bereich der Schnittlinie des Nutgrunds und der niederdruckseitigen Nutflanke aufweist. Dieser zweite Keilspalt wird wenn auch in einem reduzierten Maß sowohl im eingebauten Zustand wie auch im druckbeaufschlagten Zustand des erfindungsgemäßen Dichtrings erhalten. Der zweite Keilspalt ermöglicht Auslenkungen im Betrieb des Dichtrings in den durch den zweiten Keilspalt gebildeten Freiraum.

Weiterhin weist der erfindungsgemäße Dichtring im eingebauten, nicht druckbeaufschlagten Zustand einen dritten Keilspalt zum Nutgrund hin auf. Dieser dritte Keilspalt wird bei einer Druckbeaufschlagung geschlossen. Der dritte Keilspalt ermöglicht Auslenkungen im druckbeaufschlagten Einsatz des Dichtrings in den durch den dritten Keilspalt gebildeten Freiraum.

Eine steigende Druckbeaufschlagung des Dichtrings führt aufgrund seiner gummielastischen Werkstoffeigenschaften zu einer Kontraktion des Dichtrings in axialer Richtung und einer Dehnung des Dichtrings in radialer Richtung. Der erfindungsgemäße Dichtring kann sich derart verformen, da Auslenkungen in die zweiten und dritten Keilspalte möglich sind. Die dynamische Dichtkante kann dadurch druckentlastet werden.

Auch die Extrusionsneigung von Dichtelementen wird erheblich verbessert. Der erfindungsgemäße Dichtring hat damit den wesentlichen Vorteil, daß eine erhebliche Interferenz zwischen Dichtring und Nutraum im eingebauten Zustand des Dichtrings derart abgebaut wird, daß kein erhöhter Anpreßdruck an der dynamischen Dichtkante entsteht. Der Dichtring weist damit gegenüber bekannten Dichtringen erniedrigte Reibwerte auf. Daraus ergibt sich ein verringerter Verschleiß und erhöhte Standzeiten sind die Folge.

Es stellt sich eine stabile Pressungsverteilung im Bereich der Dichtkante ein, so daß gewährleistet ist, daß der sich zur Niederdruckseite N hin öffnende erste Keilspalt immer erhalten bleibt. Der erste Keilspalt bleibt auch nach langen Standzeiten unvermindert erhalten. Damit ist das Rückschleppverhalten eines Fluid aus dem Niederdruckbereich in den Hochdruckbereich gesichert, wenn das zweite Maschinenteil beispielsweise eine Stange ist und zum ersten Maschinenteil eine Hin- und Herbewegung ausführt.

Der erste Keilspalt zur Niederdruckseite N im Bereich der dynamischen Dichtkante steht in einer direkten Wirkverbindung mit dem zweiten Keilspalt im Nutgrundbereich. Im eingebauten, druckbeaufschlagten Zustand wirken auf den erfindungsgemäßen Dichtring im Bereich des ersten und des zweiten Keilspaltes korrespondierende Kräfte. Die Wirkverbindung zwischen dem ersten und dem zweiten Keilspalt wird durch die Ausrichtung der Außenumfangsfläche und der ersten Fläche des Dichtrings zueinander ermöglicht. Die Ausrichtung wird durch die Lage der Schnittlinie der definierten dritten und vierten Ebene und dem dritten Keilspalt bestimmt.

Die Vorspannung des erfindungsgemäßen gummielastischen Dichtrings im eingebauten Zustand erfolgt durch eine Materialverformung im Dichtringprofil im wesentlichen vor der Dichtkante, so daß gewährleistet ist, daß im Niederdruckbereich des Dichtrings im Bereich hinter der Dichtkante nahezu keine Vorspannkräfte in radialer Richtung wirken.

Das Maß der Verformung des erfindungsgemäßen Dichtrings im eingebauten und im druckbeaufschlagten Zustand kann auch durch die Auswahl des elastischen Werkstoffs beeinflußt werden.

Ein Einschnitt des erfindungsgemäßen Dichtrings trennt zwei Dichtringabschnitte zur Hochdruckseite H hin. Der Einschnitt übt unter Druckbelastung die Funktion eines Scharniers aus, das sich bei mehr oder weniger starker Belastung öffnen oder schließen kann. Ein derart ausgebildeter Dichtring kann als sogenanntes Rückschlagventil Fluid sicher von der Niederdruckseite zur Hochdruckseite transportieren, wenn das Fluid auf der Niederdruckseite N unter einem größeren Druck steht als das Fluid auf der Hochdruckseite H.

In einer Weiterbildung der Erfindung bildet der Dichtring im eingebauten Zustand mit der niederdruckseitigen Nutflanke einen sich zum Nutgrund öffnenden zweiten Keilspalt, der im Einsatzbereich für Dichtringe im Niederdruckbereich eine größere radiale Erstreckung aufweist als im Einsatzbereich für Dichtringe im Hochdruckbereich. Dies hat den Vorteil, daß das Druckansprechverhalten des erfindungsgemäßen Dichtrings individuell auf einen speziellen Einsatzbereich abgestimmt werden kann. Geringe wie auch verstärkte Fluiddrukkerhöhungen können eine vergleichbare Druckentlastung an der dynamischen Dichtkante des Dichtrings erzeugen, sofern das Dichtringprofil gemäß dem Erfindungsgedanken ausgebildet ist.

In weiterer Ausgestaltung der Erfindung ist der Dichtring im druckbeaufschlagten Zustand im Eckbereich von Nutgrund und niederdruckseitiger Nutflanke vom Nutgrund beabstandet. Dies hat den Vorteil, daß die dynamische Dichtkante des Dichtringes so lange druckentlastbar ist, wie der Dichtring über einen erhöhten Fluiddruck in den Freiraum am niederdruckseitigen Nutgrund gepreßt werden kann.

Bei einer weiteren Ausführungsform der vorliegenden Erfindung weist der Vollkörper des Dichtrings im deformationsfreien Zustand eine axiale Länge auf, die auf die 2,2-fache Länge des zweiten Dichtringabschnitts begrenzt ist, und daß die Dichtringfläche im deformationsfreien Zustand des Dichtrings parallel zur niederdruckseitigen Nutflanke verläuft.

Dies hat den Vorteil, daß der Vollkörper des erfindungsgemäßen Dichtrings aufgrund seiner Gummielastizität derart verformbar ist, um unter Druckbeaufschlagung den dritten Keilspalt zu schließen und den zweiten Keilspalt zu verkleinern. Der Dichtring ist daher in der Lage, auf eine zunehmende Druckbeaufschlagung mit einer Druckentlastung der dynamischen Dichtkante zu reagieren.

Bei einer besondes vorteilhaften Ausführungsform des erfindungsgemäßen Dichtrings weist der Dichtring den dritten Keilspalt im eingebauten, drucklosen Zustand aufgrund einer Deformation auf.

Der erfindungsgemäße Dichtring wird beim Einbau verschwenkt, in dem er verstärkt an die niederdruckseitige Nutflanke gepreßt wird. Dabei kann der Dichtring in einem Teilabschnitt den dritten Keilspalt ausbilden, der sich zum Nutgrund hin öffnet. Dadurch wird der niederdruckseitige Freiraum, wie er durch den zweiten Keilspalt bestimmt ist, beim Einbau des Dichtrings automatisch vergrößert und unter Druckbeaufschlagung kann der erfindungsgemäße Dichtring diesen Freiraum ausfüllen, in dem er druckbedingt in diesen Freiraum mehr oder weniger stark hineingepreßt wird. Damit ist ein Dichtring geschaffen, der bei erhöhtem Fluiddruck immer stärker je nach Dimensionierung druckentlastet werden kann.

Bei einer weiteren Ausführungsform der vorliegenden Erfindung weist der Vollkörper des Dichtrings im deformationsfreien Zustand eine axiale Länge aufweist, die größer als die 2,2-fache Länge des zweiten Dichtringabschnitts ist, und der Dichtring weist im gefertigten Zustand eine zur Längsachse des zweiten Maschinenteils schräggestellte Dichtringfläche auf, die im eingebauten und drucklosen Zustand des Dichtrings mit der niederdruckseitigen Nutflanke den dritten Keilspalt definiert.

Erfindungsgemäße Dichtringe dieser Länge sind aufgrund ihrer Torsionssteifigkeit nicht mehr in der Lage zu verschwenken, um einen dritten Keilspalt zur Niederdruckseite zu bilden. Aufgrund der schräggestellten Dichtringfläche stellt sich auch bei diesen Ausführungsformen, die in eine rechteckförmige Nut eingebaut werden können, ein dritter Keilspalt ein.

Bei einer anderen Weiterbildung des erfindungsgemäßen Dichtrings weist der Vollkörperanteil des Dichtrings, der die 2,2-fache axiale Länge des zweiten Dichtringabschnitts überschreitet, eine zweite Außenumfangsfläche auf, die mit dem Nutgrund einen Winkel einschließt, der kleiner ist als der Winkel zwischen der ersten Außenumfangsfläche und dem Nutgrund.

Durch eine geringere Neigung der zweiten Außenumfangsfläche gegenüber der ersten Außenumfangsfläche kann sich der druckbeaufschlagte Dichtring mit einer größeren Anlagefläche an die niederdruckseitige Nutflanke und den Nutgrund anlegen. Das Anlageverhalten des Dichtrings im statischen Dichtbereich wird daher stabilisiert. Die Sicherung der statischen Abdichtung wirkt sich auch positiv auf die Stabilisierung der Pressungsverteilung des Dichtrings, insbesondere an der dynamischen Dichtkante, aus.

Weitere Vorteile ergeben sich aus der Beschreibung der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert. Es zeigt:
- Fig. 1: einen Querschnitt eines erfindungsgemäßen Dichtrings, dessen Vollkörper im deformationsfreien Zustand eine axiale Länge aufweist, die auf die 2,2-fache Länge des zweiten Dichtringabschnitts begrenzt ist, im deformationsfreien Zustand;
- Fig. 2: einen Querschnitt des erfindungsgemäßen Dichtrings nach Fig. 1 im eingebauten Zustand;
- Fig. 3: einen Querschnitt des erfindungsgemäßen Dichtrings nach Fig. 1 im druckbeaufschlagten Zustand;
- Fig. 4: einen Querschnitt eines erfindungsgemäßen Dichtrings, dessen Vollkörper im deformationsfreien Zustand eine axiale Länge aufweist, die größer als die 2,2-fache Länge des zweiten Dichtringabschnitts ist, im deformationsfreien Zustand.

Die einzelnen Figuren der Zeichnung zeigen den erfindungsgemäßen Gegenstand stark schematisiert und sind nicht maßstäblich zu verstehen. Die einzelnen Proportionen des Dichtrings können unterschiedlich sein, solange gewährleistet ist, daß der gefertigte Dichtring zur vorgesehenen Nut ein Übermaß auf der Hochdruckseite H aufweist, das zur Niederdruckseite hin in ein Untermaß übergeht.

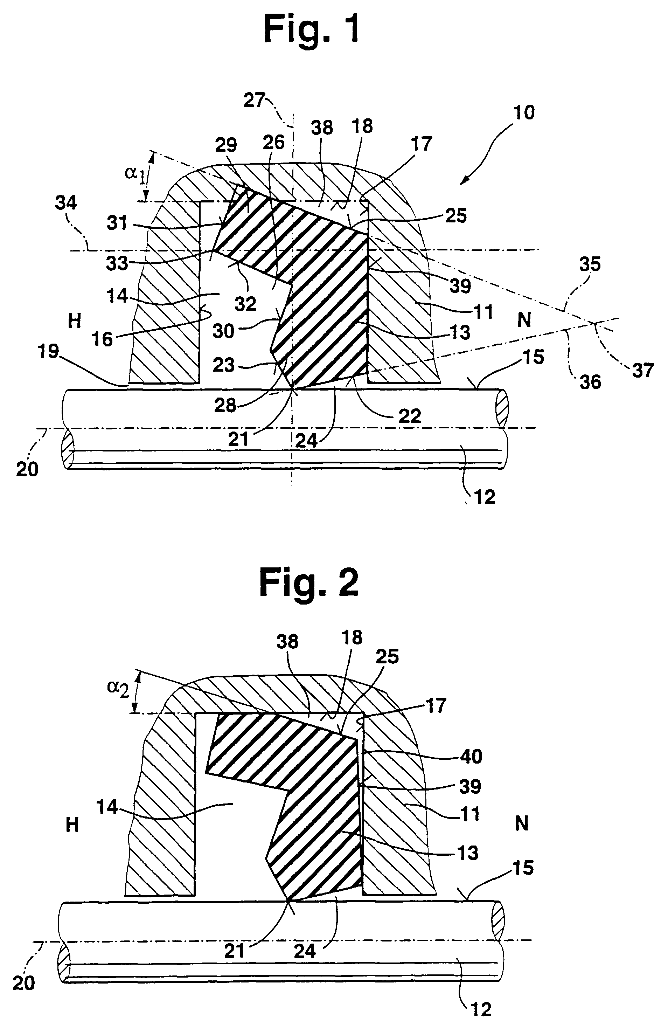

In den Figuren 1 bis 4 sind für dieselben Kennzeichnungen dieselben Bezugszeichen verwendet worden.

Fig. 1 zeigt eine Dichtungsanordnung 10, die aus einem ersten Maschinenteil 11, einem zweiten Maschinenteil 12 und einem Dichtring 13 besteht. Die konzentrischen Maschinenteile 11, 12 können sich zueinander bewegen. Das heißt, die Maschinenteile können zueinander eine Rotation bzw. eine Hin- und Herbewegung durchführen.

Im ersten Maschinenteil 11 ist eine Nut 14 ausgebildet, die sich zu einer Umfangsfläche 15 des zweiten Maschinenteils 11 öffnet. Die Nut 14 selbst ist aus einer hochdruckseitigen Nutflanke 16, einer niederdruckseitigen Nutflanke 17 und einem Nutgrund 18 gebildet. Die Maschinenteile 11, 12 sind über einen Spalt 19 voneinander beabstandet.

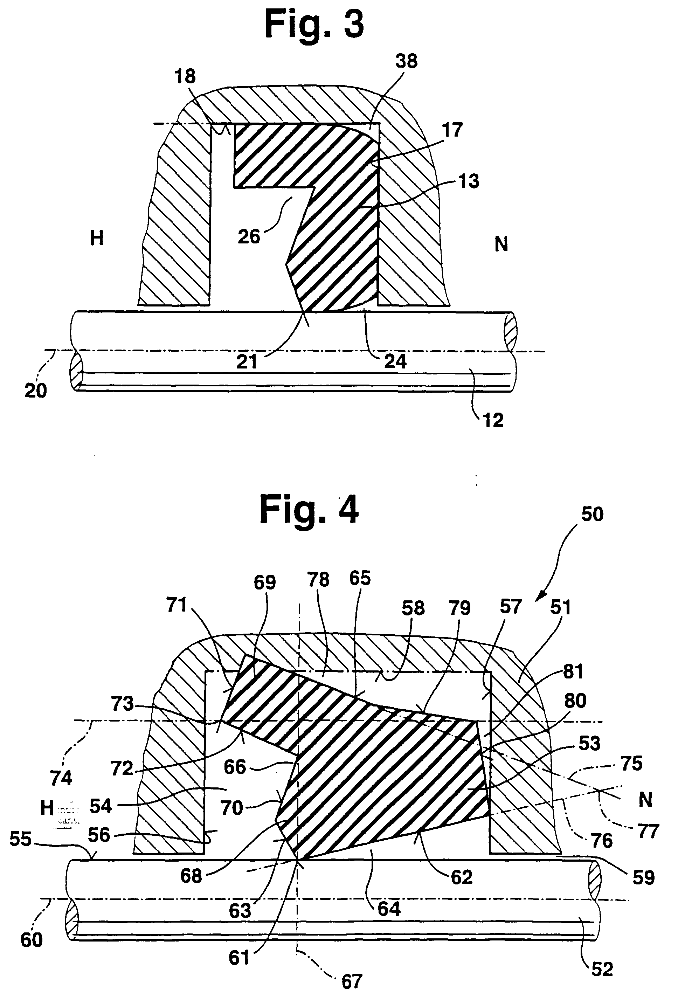

Der Dichtring 13 weist eine Rotationsachse auf, die der Längsachse 20 (Symmetrieachse) des zweiten Maschinenteils 12 entspricht. Eine dynamische Dichtkante 21 des Dichtrings 13 ist aus der Schnittlinie einer ersten Fläche 22 und einer zweiten Fläche 23 gebildet. Es versteht sich, daß sich die zweite Fläche 23 auch bis zur Stufe im Dichtring 13 erstrekken kann. Mit der Umfangsfläche 15 bildet die erste Fläche 22 einen ersten Keilspalt 24, der auch bei einer druckbeaufschlagten Dichtung zur Niederdruckseite N hin offen ist (siehe Fig. 3). Dem Nutgrund 18 gegenüberliegend ist an dem Dichtring 13 eine Außenumfangsfläche 25 ausgebildet, die im Bereich einer statischen Abdichtung am Nutgrund 18 anliegt.

In der Fig. 1 ist der Dichtring 13 in einem vollkommen entlasteten Zustand gezeigt, wie er gefertigt ist. Der Dichtring 13 ist in der Fig. 1 einer Nut 14 zugeordnet, wobei der Nutgrund 18 gestrichelt gezeichnet ist, damit die Außenkontur des Dichtrings 13 im gefertigten Zustand spannungsfrei gezeigt werden kann. In der Fig. 1 ist eine Interferenz zu erkennen, das heißt der Dichtring 13 weist ein Übermaß gegenüber der Nut 14 auf.

Der Dichtring 13 weist weiterhin zwei über einen Einschnitt 26 getrennte und über eine erste Ebene 27 zur Hochdruckseite H hin vorstehende Dichtringsabschnitte 28, 29 auf. Die erste Ebene 27 verläuft senkrecht zur Längsachse 20 durch die Dichtkante 21. Der erste Dichtringabschnitt 28 wird durch die zweite Fläche 23 und eine dritte Fläche 30 begrenzt. Der zweite Dichtringabschnitt 29 wird durch eine vierte Fläche 31 und eine fünfte Fläche 32 begrenzt. Die vierte Fläche 31 und die fünfte Fläche 32 schneiden sich in einer Schnittlinie 33 und bilden einen Absatz. Die Schnittlinie 33 definiert eine zweite Ebene 34, die parallel zur Längsachse 20 durch die Schnittlinie 33 verläuft. Die Außenumfangsfläche 25 liegt in einer dritten Ebene 35, die mit einer vierten Ebene 36 eine Schnittlinie 37 gemeinsam hat. Die vierte Ebene 36 ist dadurch bestimmt, daß in ihr die erste Fläche 22 liegt. Die Schnittlinie 33 liegt in einem Raum, der von der Umfangsfläche 15 und der zweiten Ebene 34 begrenzt wird.

Die Außenumfangsfläche 25, die an die hochdruckseitige vierte Fläche 31 des Dichtrings 13 grenzt, ist gegenüber der Längsachse 20 geneigt, wobei die Längsachse 20 mit der Außenumfangsfläche 25 einen Winkel α₁ definiert. In der Figur ist zu erkennen, daß das Übermaß, das im Bereich der Schnittlinie der Außenumfangsfläche 25 und der hochdruckseitigen vierten Fläche 31 ausgebildet ist, im Bereich der dynamischen Dichtkante 21 endet. Im übrigen Bereich der Außenumfangsfläche 25 ist der Dichtring 13 mit einem Untermaß gefertigt, d.h., es bildet sich ein zweiter Keilspalt 38 im Bereich des Nutgrunds 18 und der niederdruckseitigen Nutflanke 17 aus. Der Dichtring 13 selbst ist derart gefertigt, daß er mit einer sich radial erstreckenden Dichtringfläche 39 an der niederdruckseitigen Nutflanke 17 anliegt.

Fig. 2 zeigt einen Querschnitt des Dichtrings 13 im eingebauten Zustand zwischen den Maschinenteilen 11, 12. Der Dichtring 13 liegt über die dynamische Dichtkante 21 auf der Umfangsfläche 15 des zweiten Maschinenteils 12. Der Dichtring 13 ist in der Nut 14 vorgespannt, daß der Dichtring 13 derart deformiert wird, so daß sich ein Winkel α₂ zwischen Längsachse 20 und Außenumfangsfläche 25 einstellt, der kleiner ist als der Winkel α₁, wie er in der Fig. 1 gezeigt ist. Im Bereich der niederdruckseitigen Nutflanke 17 und zum Nutgrund 18 hin ist der zweite Keilspalt 38 auch nach dem Einbau des Dichtrings 13 erhalten. Durch die Deformation des Dichtrings 13 in der Einbaulage ist ein dritter Keilspalt 40 zwischen der niederdruckseitigen Nutflanke 17 und der daran angrenzenden Dichtringfläche 39 des Dichtrings 13 ausgebildet. In Einbaulage ist auch der erste Keilspalt 24 ausgebildet.

Fig. 3 zeigt den Dichtring 13 der Fig. 1 und der Fig. 2 im druckbeaufschlagten Zustand. Mit H ist die Hochdruckseite gekennzeichnet und mit N ist die Niederdruckseite gekennzeichnet. Der Dichtring 13 weist von der Hochdruckseite H aus gesehen den Einschnitt 26 auf, der unter Druckbelastung eine Scharnierfunktion übernimmt. Der Dichtring 13 wird unter Druck in den Freiraum gepreßt, den der zweite und dritte Keilspalt 38, 40 begrenzen. Durch die Auslenkung des Dichtrings 13 wird die Dichtkante 21 entlastet. Auch unter Druckbeaufschlagung ist sowohl der erste Keilspalt 24 wie auch der zweite Keilspalt 38 ausgebildet. Unter Druck kann sich der dritte Keilspalt 40 ganz schließen, so daß sich die Dichtringfläche 39 an die niederdruckseitige Nutflanke 17 anlegt.

Fig. 4 zeigt eine Dichtungsanordnung 50, die aus einem ersten Maschinenteil 51, einem zweiten Maschinenteil 52 und einem Dichtring 53 besteht. Die konzentrischen Maschinenteile 51, 52 können sich zueinander bewegen. Das heißt, die Maschinenteile können zueinander eine Rotation bzw. eine Hin- und Herbewegung durchführen.

Im ersten Maschinenteil 51 ist eine Nut 54 ausgebildet, die sich zur Umfangsfläche 55 des zweiten Maschinenteils 52 öffnet. Die Nut 54 selbst ist aus einer hochdruckseitigen Nutflanke 56, einer niederdruckseitigen Nutflanke 57 und einem Nutgrund 58 gebildet. Die Maschinenteile 51, 52 sind über einen Spalt 59 voneinander beabstandet.

Der Dichtring 53 weist eine Rotationsachse auf, die der Längsachse 60 (Symmetrieachse) des zweiten Maschinenteils 52 entspricht. Eine dynamische Dichtkante 61 des Dichtrings 53 ist aus der Schnittlinie einer ersten Fläche 62 und einer zweiten Fläche 63 gebildet. Es versteht sich, daß sich die zweite Fläche 63 auch bis zur Stufe im Dichtring 53 erstrekken kann. Mit der Umfangsfläche 55 bildet die erste Fläche 62 einen ersten Keilspalt 64, der auch bei einer druckbeaufschlagten Dichtung zur Niederdruckseite N hin offen ist (siehe Fig. 3). Dem Nutgrund 58 gegenüberliegend ist an dem Dichtring 53 eine erste Außenumfangsfläche 65 ausgebildet, die im Bereich einer statischen Abdichtung am Nutgrund 58 anliegt.

In der Fig. 4 ist der Dichtring 53 in einem vollkommen entlasteten Zustand gezeigt, wie er gefertigt ist. Der Dichtring 53 ist in der Fig. 4 einer Nut 54 zugeordnet, wobei der Nutgrund 58 gestrichelt gezeichnet ist, damit die Außenkontur des Dichtrings 53 im gefertigten Zustand spannungsfrei gezeigt werden kann. In der Fig. 4 ist eine Interferenz zu erkennen, das heißt, der Dichtring 53 weist ein Übermaß gegenüber der Nut 54 auf.

Der Dichtring 53 weist weiterhin zwei über einen Einschnitt 66 getrennte und über eine erste Ebene 67 zur Hochdruckseite H hin vorstehende Dichtringsabschnitte 68, 69 auf. Die erste Ebene 67 verläuft senkrecht zur Längsachse 60 durch die Dichtkante 61. Der erste Dichtringabschnitt 68 wird durch die zweite Fläche 63 und eine dritte Fläche 70 begrenzt. Der zweite Dichtringabschnitt 69 wird durch eine vierte Fläche 71 und eine fünfte Fläche 72 begrenzt. Die vierte Fläche 71 und die fünfte Fläche 72 schneiden sich in einer Schnittlinie 73 und bilden einen Absatz. Die Schnittlinie 73 definiert eine zweite Ebene 74, die parallel zur Längsachse 60 durch die Schnittlinie 73 verläuft. Die erste Außenumfangsfläche 65 liegt in einer dritten Ebene 75, die mit einer vierten Ebene 76 eine Schnittlinie 77 gemeinsam hat. Die vierte Ebene 76 ist dadurch bestimmt, daß in ihr die erste Fläche 62 liegt. Die Schnittlinie 77 liegt in einem Raum, der von der Umfangsfläche 55 und der zweiten Ebene 74 begrenzt wird.

Die erste Außenumfangsfläche 65, die an die hochdruckseitige vierte Fläche 71 des Dichtrings 53 grenzt, ist gegenüber der Längsachse 60 geneigt, wobei die Längsachse 60 mit der ersten Außenumfangsfläche 65 einen Winkel α₁ definiert. In der Figur ist zu erkennen, daß das Übermaß, das im Bereich der Schnittlinie der ersten Außenumfangsfläche 65 und der hochdruckseitigen vierten Fläche 71 ausgebildet ist, im Bereich der dynamischen Dichtkante 61 endet. Im übrigen Bereich der ersten Außenumfangsfläche 65 ist der Dichtring 53 mit einem Untermaß gefertigt, d.h., es bildet sich ein zweiter Keilspalt 78 im Bereich des Nutgrunds 58 und der niederdruckseitigen Nutflanke 57 aus. Eine zweite Außenumfangsfläche 79 des Dichtrings 53 schließt mit dem Nutgrund 58 einen Winkel ein, der kleiner ist als der Winkel zwischen der ersten Außenumfangsfläche 65 und dem Nutgrund 58.

Der Dichtring 53 selbst ist derart gefertigt, daß er mit einer schräggestellten Dichtringfläche 80 an der niederdruckseitigen Nutflanke 57 derart anliegt, daß sich im deformationsfreien Zustand des Dichtrings 53 ein dritter Keilspalt 81 bildet. Der Keilspalt 81 wird von der Nutflanke 57 und der Dichtringfläche 80 begrenzt. Der dritte Keilspalt 81 wird mit zunehmender Druckbeaufschlagung geschlossen, so daß die Dichtringfläche 80 mit ihrer gesamten radialen Länge an der niederdruckseitigen Nutflanke 57 zur Anlage kommt.

Ein Dichtring 13 zwischen zwei zueinander beweglichen konzentrischen Maschinenteilen 11, 12 ist aus einem gummielastischen Material gefertigt und er ist in eine Nut 14 eingelegt, die vom ersten Maschinenteil 11 ausgehend gegenüber dem zweiten Maschinenteil 12 geöffnet ist. Der Dichtring 13 weist gegenüber der Nut 14, in die der Dichtring 13 einzubauen ist, ein Übermaß auf, das im hochdruckseitigen Bereich des Dichtrings 13 ausgebildet ist. Im niederdruckseitigen Bereich des Dichtrings 13 ist der Dichtring 13 mit Untermaß gefertigt. Die dem Nutgrund 18 gegenüberliegende Außenumfangsfläche 25 weist im vollkommen entlasteten Zustand des Dichtrings 13 gegenüber einer Längsachse 20 einen Winkel α₁ auf, der sich in Einbaulage des Dichtrings 13 auf einen Winkel α₂ verkleinert. Ein im eingebauten Zustand des Dichtrings 13 im Bereich der niederdruckseitigen Nutflanke 17 und dem Nutgrund 18 entstehender zweiter Keilspalt 38 bleibt auch im druckbelasteten Zustand des Dichtrings 13 erhalten. Zwischen der Umfangsfläche 15 des zweiten Maschinenteils 12 und dem Dichtring 13 ist niederdruckseitig ein erster Keilspalt 24 ausgebildet, der auch unter Druckbelastung erhalten bleibt.

## Patentansprüche

1. Gummielastischer Dichtring (13; 53) zwischen zwei zueinander bewegten konzentrischen Maschinenteilen (11, 12; 51, 52), die den Dichtring (13; 53) in einer zum zweiten Maschinenteil (12; 52) hin offenen, aus einem Nutgrund (18; 58) und Nutflanken (16, 17; 56, 57) bestehenden Nut (14; 54) des ersten Maschinenteils (11; 51) angeordnet halten, indem der Dichtring (13; 53) mit einer dynamischen Dichtkante (21; 61) an einer am zweiten Maschinenteil (12; 52) ausgebildeten Umfangsfläche (15; 55) anliegt, die mit einer von der dynamischen Dichtkante (21; 61) ausgehenden und sich zur Niederdruckseite N erstrekkenden ersten Fläche (22; 62) einen ersten Keilspalt (24; 64) bildet, der Dichtring (13; 53) mit einer sich am Nutgrund (18; 58) abstützenden Außenumfangsfläche (25; 65) einen sich zur Niederdruckseite N öffnenden zweiten Keilspalt (38; 78) bildet, der Dichtring (13; 53) eine orthogonal zur Längsachse (20; 60) des zweiten Maschinenteils (12; 52) und die dynamische Dichtkante (21; 61) schneidende erste Ebene (27; 67) definiert, über die ein über einen Einschnitt (26; 66) getrennter erster und ein zweiter Dichtringabschnitt (28, 29; 68, 69) zur Hochdruckseite H gerichtet vorstehen, wobei der erste Dichtringabschnitt (28; 68) von mindestens einer Fläche (22, 23; 62, 63) begrenzt ist, die einenends in der dynamischen Dichtkante (21; 61) endet, und der zweite Dichtringabschnitt (29; 69) über den ersten Dichtringabschnitt (28; 68) in Richtung Hochdruckseite H vorsteht und von der Außenumfangsfläche (25; 65) und einer vierten und fünften sich schneidenden und einen Absatz bildenden Flächen (31, 32; 71, 72) gebildet ist, die eine vom Nutgrund (18; 58) beabstandete Schnittlinie (33; 73) bilden, die eine zur Längsachse (20; 60) parallel verlaufende zweite Ebene (34; 74) definiert,
dadurch gekennzeichnet,
daß eine Schnittlinie (37; 77) von einer dritten und einer vierten Ebene (35, 36; 75, 76), in der die Außenumfangsfläche (25; 65) und die erste Fläche (22; 62) im deformationsfreien Zustand des Dichtrings (13; 53) liegen, in einem Raum zwischen der zweiten Ebene (34; 74) und der Umfangsfläche (15; 55) des zweiten Maschinenteils liegt,
daß der Dichtring (13; 53) zwischen der ersten Ebene (27; 67) und der Niederdruckseite N als Vollkörper ausgebildet ist,
und daß der Dichtring (13; 53) im in der Nut (14; 54) eingebauten, drucklosen Zustand einen sich zum Nutgrund (18; 58) öffnenden und von der niederdruckseitigen Nutflanke (17; 57) und einer angrenzenden Dichtringfläche (39; 80) gebildeten dritten Keilspalt (40; 81) aufweist.

2. Dichtring nach Anspruch 1, dadurch gekennzeichnet, daß der dritte Keilspalt (40; 81) im Einsatzbereich für Dichtringe im Niederdruckbereich eine größere radiale Erstreckung aufweist als im Einsatzbereich für Dichtringe im Hochdruckbereich.

3. Dichtring nach Anspruch 1 oder 2, dadurch gekennzeichnet, daß der Dichtring (13; 53) im druckbeaufschlagten Zustand im Eckbereich von Nutgrund (18; 58) und niederdruckseitiger Nutflanke (17; 57) vom Nutgrund (18; 58) beabstandet ist.

4. Dichtring nach einem der vorherigen Ansprüche, dadurch gekennzeichnet, daß der Vollkörper des Dichtrings (13) im deformationsfreien Zustand eine axiale Länge aufweist, die auf die 2,2-fache Länge des zweiten Dichtringabschnitts (29) begrenzt ist, und daß die Dichtringfläche (39) im deformationsfreien Zustand des Dichtrings (13) parallel zur niederdruckseitigen Nutflanke (17) verläuft.

5. Dichtring nach Anspruch 4, dadurch gekennzeichnet, daß der Dichtring (13) den dritten Keilspalt (40) im eingebauten, drucklosen Zustand aufgrund einer Deformation aufweist.

6. Dichtring nach einem der Ansprüche 1 bis 3, dadurch gekennzeichnet, daß der Vollkörper des Dichtrings (53) im deformationsfreien Zustand eine axiale Länge aufweist, die größer als die 2,2-fache Länge des zweiten Dichtringabschnitts (69) ist, und daß der Dichtring (53) im gefertigten Zustand eine zur Längsachse des zweiten Maschinenteils schräggestellte Dichtringfläche (80) aufweist, die im eingebauten und drucklosen Zustand des Dichtrings (53) mit der niederdruckseitigen Nutflanke (57) den dritten Keilspalt (81) definiert.

7. Dichtring nach Anspruch 6, dadurch gekennzeichnet, daß der Vollkörperanteil des Dichtrings (53), der die 2,2-fache axiale Länge des zweiten Dichtringabschnitts (69) überschreitet, eine zweite Außenumfangsfläche (79) aufweist, die mit dem Nutgrund (58) einen Winkel einschließt, der kleiner ist als der Winkel zwischen der ersten Außenumfangsfläche (65) und dem Nutgrund (58).

## Claims

1. Rubber elastic sealing ring (13; 53) between two concentric machine components (11, 12; 51, 52) moved towards each other and holding the sealing ring (13; 53) in place within a groove (14; 54) in the first machine component (11; 51) opening towards the second machine component (12; 52) formed from a groove bottom (18; 58) and groove sides (16, 17; 56, 57), whereby the sealing ring (13; 53) seats with a dynamic sealing edge (21; 61) on a peripheral surface (15; 55) formed on the second machine component (12; 52) which forms a first wedge-shaped gap (24; 64) together with a first surface (22; 62) extending from the dynamic sealing edge (21; 61) towards the low pressure side N, the sealing ring (13; 53) forming a second wedge-shaped gap (38; 78) with an outer peripheral surface (25; 65) supported on the bottom of the groove (18; 58) which opens towards the low pressure side N, the sealing ring (13; 53) defining a first plane (27; 67) which is orthogonal to the longitudinal axis (20; 60) of the second machine component (12; 52), which intersects the dynamic sealing edge (21; 61), and beyond which a first and a second sealing ring section (28, 29; 68, 69), separated from each other by means of a cut (26; 66), project towards the high pressure side H, whereby the first sealing ring section (28; 68) is defined by at least one surface (22, 23; 62, 63) having an end at the dynamic sealing edge (21; 61) and the second sealing ring section (29; 69) projects beyond the first sealing ring section (28; 68) in the direction towards the high pressure side H and is formed by the outer peripheral surface (25; 65) and by fourth and fifth mutually intersecting surfaces (31, 32; 71, 72) which form a shoulder and a line of intersection (33; 73) separated from the bottom of the groove (18, 58) and defining a second plane (34; 74) running parallel to the longitudinal axis (20; 60), characterized in that a line of intersection (37; 77) of a third and a fourth plane (35, 36; 75, 76), in which the outer peripheral surface (25; 65) and the first surface (22; 62) are located in the deformation-free state of the sealing ring (13; 53), lies in a region between the second plane (34; 74) and the peripheral surface of the second machine component (15; 55), and the sealing ring (13; 53) is configured as a solid body between the first plane (27; 67) and the low pressure side N, and the sealing ring (13; 53) exhibits a third wedge-shaped gap (40; 81) in the state in which it is installed in the groove (14; 54) and not subjected to pressured which opens towards the bottom of the groove (18; 58) and which is formed by the low pressure side of the groove (17; 57) and an adjacent sealing ring surface (39; 80).

2. Sealing ring according to claim 1, characterized in that the third wedge-shaped gap (40; 81) exhibits a larger radial extent for low pressure sealing ring applications than for high pressure sealing ring applications.

3. Sealing ring according to claim 1 or 2 characterized in that the sealing ring (13; 53) is separated in the pressurized state from the groove bottom (18; 58) in the corner region between the bottom of the groove (18; 58) and the low pressure side of the groove (17; 57).

4. Sealing ring according to one of the preceding claims, characterized in that the solid body of the sealing ring (13), in the deformation-free state, exhibits an axial length which is limited to 2.2 times the length of the second sealing ring section (29) and the sealing ring surface (39) runs parallel to the low pressure side of the groove (17) in the deformation-free state of the sealing ring (13).

5. Sealing ring according to claim 4, characterized in that the sealing ring (13) exhibits the third wedge-shaped gap (40) due to a deformation in the installed pressureless state.

6. Sealing ring according to one of the claims 1 through 3, characterized in that the sealing ring (53) solid body exhibits an axial length in the deformation-free state which is larger than 2.2 times the length of the second sealing ring section (69) and the sealing ring (53) exhibits a sealing ring surface (80) in the manufactured state which is slanted relative to the longitudinal axis of the second machine component and which defines the third wedge-shaped gap (81) together with the low pressure side of the groove (57) in the installed and pressureless state of the sealing ring (53).

7. Sealing ring according to claim 6, characterized in that the solid body portion of the sealing ring (53) which exceeds 2.2 times the axial length of the second sealing ring section (69), exhibits a second outer peripheral surface (79) which forms an angle with the bottom of the groove (58) which is smaller than the angle between the first outer peripheral surface (65) and the bottom of the groove (58).

## Revendications

1. Bague d'étanchéité (13 ; 53) présentant l'élasticité du caoutchouc, entre deux parties de machines concentriques (11, 12 ; 51, 52), qui se déplacent l'une par rapport à l'autre, lesdites parties retenant la bague d'étanchéité (13 ; 53) dans une gorge (14 ; 54) de la première partie de machine (11 ; 51), ouverte en direction de la seconde partie de machine (12 ; 52) et constituée par un fond de gorge (18 ; 58) et par des flancs de gorge (16, 17 ; 56, 57), du fait que la bague d'étanchéité (13 ; 53) s'applique par une arête d'étanchéité dynamique (21 ; 61) contre une surface périphérique (15 ; 55) réalisée sur la seconde partie de machine (12 ; 52), ladite surface périphérique (15 ; 55) formant avec une première surface (22 ; 62) qui part de l'arête d'étanchéité dynamique (21 ; 61) et s'étend jusqu'au côté basse pression (N), une première fente en coin (24 ; 64), la bague d'étanchéité (13 ; 53) formant avec une surface périphérique extérieure (25 ; 65) qui s'appuie contre le fond (18 ; 58) de la gorge, une seconde fente en coin (38 ; 78) qui s'ouvre vers le côté basse pression (N), la bague d'étanchéité (13 ; 53) définissant un premier plan (27, 67) perpendiculaire à l'axe longitudinal (20 ; 60) de la seconde partie de machine (12 ; 52) et qui recoupe l'arête d'étanchéité dynamique (21 ; 61), au-delà duquel dépassent un premier et un second tronçon de bague d'étanchéité (28, 29 ; 68, 69) dirigés vers le côté haute pression (H) et séparés par une entaille (26 ; 66), le premier tronçon de bague d'étanchéité (28 ; 68) étant délimité par au moins une surface (22 , 23 ; 62, 63) qui se termine à une extrémité dans l'arête d'étanchéité dynamique (21 ; 61), et le second tronçon de bague d'étanchéité (29 ; 69) dépassant au-delà du premier tronçon de bague d'étanchéité (28 ; 68) en direction du côté haute pression (H), et étant formé par la surface périphérique extérieure (25 ; 65) et par une quatrième et une cinquième surface (31, 32, 71, 72) qui se recoupent et qui forment un talon, lesdites surfaces formant une ligne de coupe (33 ; 73) à distance du fond de gorge (18 ; 58), laquelle définit un second plan (34 ; 74) s'étendant parallèlement à l'axe longitudinal (20 ; 60),
caractérisée
en ce qu'une ligne de coupe (37 ; 77) d'un troisième et d'un quatrième plan (35, 36 ; 75, 76), dans lesquels est située la surface périphérique extérieure (25 ; 65) et la première surface (22 ; 62) dans l'état déformé de la bague d'étanchéité (13 ; 53), est située dans un espace entre le second plan (34 ; 74) et la surface périphérique (15 ; 55) de la seconde partie de machine,
en ce que la bague d'étanchéité (13 ; 53) est réalisée sous forme d'un corps plein entre le premier plan (27 ; 67) et le côté basse pression N,
et en ce que la bague d'étanchéité (13 ; 53) présente, dans l'état sans pression monté dans la gorge (14 ; 54), une troisième fente en coin (40 ; 81) qui s'ouvre vers le fond de gorge (18 ; 58), et qui est formée par un flanc de gorge (17 ; 57) du côté basse pression et par une surface limitrophe (39 ; 80) de la bague d'étanchéité.

2. Bague d'étanchéité selon la revendication 1, caractérisée en ce que la troisième fente en coin (40 ; 81) présente dans le domaine d'application pour des bagues d'étanchéité dans la plage des basses pressions une étendue radiale supérieure à celle dans le domaine d'application pour des bagues d'étanchéité dans la plage des hautes pressions.

3. Bague d'étanchéité selon l'une ou l'autre des revendications 1 et 2, caractérisé en ce que la bague d'étanchéité (13 ; 53) est, dans l'état mis sous pression, à distance du fond de gorge (18 ; 58) dans la région du coin du fond de gorge (18 ; 58) et du flanc de gorge côté basse pression (17 ; 57).

4. Bague d'étanchéité selon l'une des revendications précédentes, caractérisée en ce que, dans l'état sans déformation, le corps plein de la bague d'étanchéité (13) présente une longueur axiale qui est limitée à 2,2 fois la longueur du second tronçon de bague d'étanchéité (29), et en ce que, dans l'état non déformé de la bague d'étanchéité (13), la surface annulaire d'étanchéité (39) s'étend parallèlement au flanc de gorge (17) côté basse pression.

5. Bague d'étanchéité selon la revendication 4, caractérisée en ce que la bague d'étanchéité (13) présente la troisième fente en coin (40) dans l'état monté et sans pression en raison d'une déformation.

6. Bague d'étanchéité selon l'une des revendications 1 à 3, caractérisée en ce que, dans l'état non déformé, le corps plein de la bague d'étanchéité (53) présente une longueur axiale qui est supérieure à 2,2 fois la longueur du second tronçon de bague d'étanchéité (69), et en ce que dans la situation finie, la bague d'étanchéité (53) présente une surface annulaire d'étanchéité (80) oblique vis-à-vis de l'axe longitudinal de la seconde partie de machine, qui définit, dans l'état monté et sans pression de la bague d'étanchéité (53), la troisième fente en coin (81) avec le flanc de gorge côté basse pression (57).

7. Bague d'étanchéité selon la revendication 6, caractérisée en ce que la partie pleine du corps de la bague d'étanchéité (53), qui dépasse 2,2 fois la longueur axiale du second tronçon de bague d'étanchéité (69), présente une seconde surface périphérique extérieure (79) qui enferme avec le fond de gorge (58) un angle qui est inférieur à l'angle entre la première surface périphérique extérieure 65) et le fond de gorge (58).
